# EUROPEAN PATENT APPLICATION

(11) **EP 4 538 107 A1**
(43) Date of publication of application: **16.04.2025**
(21) Application number: 24183204.7
(22) Date of filing: 19.06.2024
(51) Int. Cl.: B60L 53/22, B60L 53/24, B60L 58/12, B60L 53/20

(54) **SYSTEM AND METHOD FOR ENERGY CONVERSION**

(30) Priority: 19.06.2023 US 202363508956 P
(71) Applicant: Transportation IP Holdings, LLC, Norwalk, CT 06851 (US)
(72) Inventor: Kumar, Ajith Kuttannair, Erie, PA (US)
(74) Representative: K&L Gates LLP

(57) **Abstract**

A method is provided that may include activating a converter coupled with at least one energy storage device, one or more inverters, and one or more of a load or a charging input. The converter may be activated based on (a) demand characteristics of the one or more of the load or the charging input and (b) supply characteristics of the at least one energy storage device. The converter may be activated to change a voltage that may be supplied to the load or that may be supplied by the charging input via the inverter.

## Description

### BACKGROUND

### Technical Field.

Examples of the subject matter herein relate to methods and systems for selective energy conversion.

### Discussion of Art.

Power supplies may be electronic/electrical circuits that supply electric power to one or more electric loads. The term "power supply" can refer to collections or an assembly of electrical devices that convert one form of electrical energy to another, and may be referred to as "power converters." Many power supplies can include two or more power converters connected together.

Vehicles or vehicle systems, for example automobiles, trains, buses, off-highway vehicles (OHV), may require an energy source that provides energy to power one or more loads of the vehicle or vehicle system. For example, certain vehicles may be powered by electric traction motors coupled in driving relationship to one or more axles or motor-wheel sets of the vehicle. In the motoring or traction mode of operation, the traction motors may be supplied with electric current from a controllable source of electric power. The source of electric power may be an engine-driven traction alternator/rectifier/inverter combination, a direct current drive source including a direct current (DC) motor without an inverter, one or more batteries, fuel cells, photovoltaic devices, or the like.

Different loads of the vehicle, for example the traction system and an auxiliary system, may require different levels of voltage to operate. Thus, the loads may require power converters. However, such components may contribute to the overall size and weight of the vehicle and thus to the costs of the vehicle.

While many systems may be used, we will discuss in reference to a traction system, for clarity and brevity. Since traction systems and energy storage systems may have different voltage input requirements and output capabilities, prior systems have used direct current to direct current (DC/DC) converters between the traction system and the energy storage system to step up or step down the voltage from the energy storage system to the traction system.

Existing traction and energy storage systems either require a DC/DC converter running constantly to isolate traction from the energy storage system or a system with a wide range of voltage capability. Either solution may result in the traction system and/or energy storage system being exceedingly expensive, heavy, and/or large.

It may be desirable to have a system and method that differs from those that are currently available.

### BRIEF DESCRIPTION

In accordance with one example or aspect, a method is provided that includes activating a converter coupled with at least one energy storage device, one or more inverters, and one or more of a load or a charging input. The converter is activated based on (a) demand characteristics of the one or more of the load or the charging input and (b) supply characteristics of the at least one energy storage device. The converter is activated to change/supplement/augment a voltage that is supplied to the load or that is supplied by the charging input via the inverter.

In accordance with another example or aspect, a power supply system is provided that includes a converter and a controller. The converter may change a voltage output by an energy storage device prior to the voltage being supplied to an inverter responsive to activation of the converter. The controller may selectively activate the converter based at least in part on a measured demand characteristic and on a measured electric supply characteristic.

In accordance with one example or aspect, a power supply system is provided that includes a controller. The controller may switch operation of a vehicle power system between different modes. The modes may include a normal mode and a boosted voltage mode. The controller may switch the operation of the vehicle power system to the boosted voltage mode responsive to a voltage of a vehicle battery being less than a threshold amount and the vehicle being in motion.

### BRIEF DESCRIPTION OF THE DRAWINGS

The subject matter may be understood from reading the following description of non-limiting examples, with reference to the attached drawings, wherein below:
FIG. 1 is an electrical schematic of an energy conversion system, according to one example;
FIG. 2 is a graph illustrating an output voltage and a state of charge of an energy storage device and a required voltage of a traction system, according to one example;
FIG. 3 is an electrical schematic of an energy conversion system including a dual active bridge power converter, according to one example;
FIG. 4 is a switching mode map implemented in a power converter, according to one example;
FIG. 5 is an electrical schematic of an energy conversion system, according to one example;
FIG. 6 is an electrical schematic of an energy conversion system, according to one example; and
FIG. 7 is a flowchart of a method of energy conversion, according to one example.

### DETAILED DESCRIPTION

Embodiments of the subject matter described herein may relate to methods and systems of selective energy conversion, and components thereof. Specifically, the method or system may be used to selectively convert energy from an energy provision system to power components of a vehicle system. An embodiment may provide distribution of power to one or more systems of the vehicle system that may have different energy requirements. The system may reduce the usage, number, and/or size of energy conversion devices which may reduce weight, size, and cost of the system while increasing energy efficiency.

Some embodiments are described in connection to vehicles or vehicle systems. The vehicle as described herein extends to multiple types of vehicles or vehicle systems. These vehicle types may include automobiles, trucks (with or without trailers), rail vehicle or rail vehicle systems, buses, marine vessels, aircraft, mining vehicles, agricultural vehicles, or other off-highway vehicles. The vehicle systems described herein (rail vehicle systems or other vehicle systems that do not travel on rails or tracks) can be formed from a single vehicle or multiple vehicles. With respect to multi-vehicle systems, the vehicles can be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together as a group. Vehicle groups may be referred to as a convoy, consist, swarm, fleet, platoon, and train.

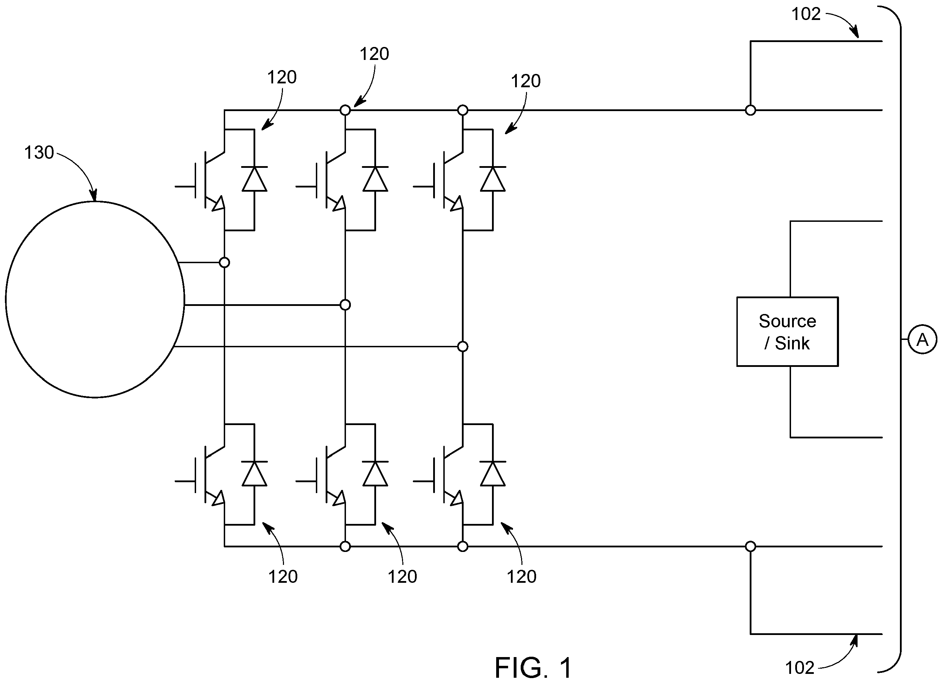

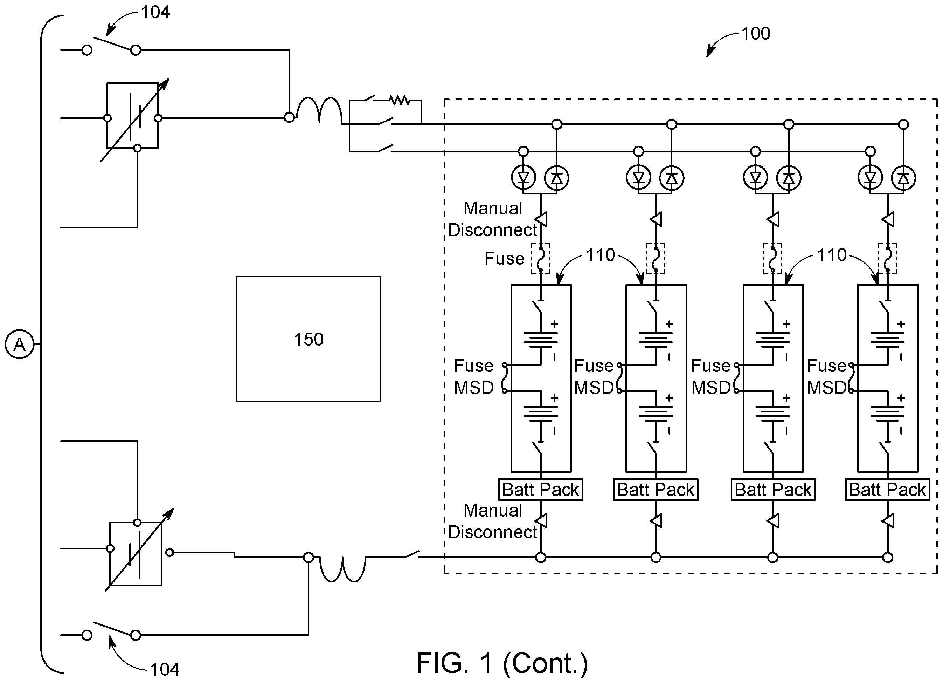

Figure 1 illustrates one example of an energy conversion system 100. The energy conversion system may include one or more converters 102, one or more energy provision systems 110, one or more inverters 120, and a load 130. In one example, the energy conversion system may include the energy provision system. The energy provision system may be a single energy system or may consist of a bank of 1, 2, 3 or more energy systems. The energy provision system may include an energy source and the one or more energy storage devices. The energy storage device may include one or more batteries, fuel cells, capacitors, photovoltaic devices, flywheels, alternators, generators, or the like. The energy source may include a diesel powered system, a natural gas powered systems, bio-diesel powered systems, one or more battery sources, voltage sources (such as but not limited to capacitors), chemical sources, pressure based sources (such as but not limited to spring and/or hydraulic expansion), electrical current sources (such as but not limited to inductors), inertial sources (such as but not limited to flywheel devices), gravitational-based power sources, and/or thermal-based power sources. Additionally, the power source may be external, such as, but not limited to, an electrically powered system, where power may be sourced externally from overhead catenary wire, third rail, and/or magnetic levitation coils. In one example, the vehicle may include more than one energy provision systems.

The energy provision system may provide an electrical energy to the load. In one example, however, the load may require a voltage that may be greater than or less than a voltage output by the energy provision system device. The converter may be used to step up or step down the voltage, or a portion of the voltage, output by the energy provision system such that the voltage may be within an acceptable range to power the load. In one example, the electrical energy, or a portion thereof, may flow from the energy provision system, through the converters, through the inverters, and to the load. In one example, a charging input may be directed to the energy provision system to charge the energy provision system. The charging input may be from an external source, such as a charging station, or an onboard source, for example a charging input from a dynamic braking event. The charging input may need to be stepped up or stepped down by the converters to be in a useable range to charge the energy provision system.

The converters may change one or more electrical parameters of the electrical energy received from the energy provision system to a level or range that may be appropriate for use by the load. The electrical parameter that is changed may be voltage, phase, current, or the like. The converter may include a DC/DC converter, a dual active bridge (DAB) converter, a triple active bridge converter (XAB), a DC/AC converter, an AC/AC converter, an AC/DC converter, an inverter, rectifier, transformer, or the like that may modify a value of the electrical parameter of the electrical energy conducted from the energy provision system to the load.

The converter may be positioned between the energy provision system and the load. While in one example, the converters may be active all the time and may convert all voltage from the energy provision system to the load, in other examples, the converters may be selectively activated based on the demand characteristics of the load and the supply characteristics of the energy provision system, as discussed further below.

In one example, the converter may include one or more switches 104. The switches used in the converters may be electrically controllable switches, such as semiconductor switches. Non-limiting examples of these semiconductor switches may include transistors, gate commutated thyristors, field effect transistors (FETs), insulated gate bipolar transistors (IGBTs), gate turn-off thyristors (GTOs), static induction transistors, static induction thyristors, or combinations thereof. Moreover, materials used to form the semiconductor switches may include, but are not limited to, silicon (Si), silicon carbide (SiC), gallium nitride (GaN), or combinations thereof.

The switches may be closed to allow the voltage from/to the energy provision system to flow through the converter directly to/from the load without being converted. For example, the switches may act as a converter bypass in a closed position as the closed switches provide a conductive pathway for the electric energy to pass around or bypass the converter to the load without being converted (e.g., without the voltage being stepped up or stepped down). The switches may be opened to allow the voltage from the energy provision system to be conducted to the converter. A portion of the voltage may be converted by the converter while the remaining portion of the voltage may be conducted to the load without being converted. For example, only a portion of the voltage may be converted, while the remainder of the voltage may be conducted through the converter without being converted. By opening the switches and converting a portion of the voltage, a greater voltage may be provided to the load from the energy provision system by stepping up a portion of the voltage with the converter. The switches may allow for the converter to be selectively engageable, such that the converter may only be used when needed.

As illustrated in Figure 1, there may be a positive converter positioned at a positive bus that may conduct positive voltage and a negative converter positioned at a negative bus that may conduct negative voltage. The arrangement of the converters may allow for a symmetrical distribution of the energy conversion system. In one example, the converters may be controllable such that the converter may convert any of voltage amount below or up to the maximum capacity of the converter. For example, if the converter may have a 100V capacity, the converter may convert 100V, 75V, 50V, 10V, 1V, or any amount in between, based on a demand characteristic of the load or the charging input. This may allow the converter to be utilized for the specific amount of voltage needed without converting unnecessary voltage. In combination with the switches discussed above, this may provide an energy conversion system that increases performance and efficiency by using converters only when needed.

In one example, the load may be a traction system. The traction system may include or represent one or more traction motors of a propulsion system and/or a brake system (e.g., where the motors generate current during regenerative braking). The traction motor may be a part of the propulsion system that may operate to move a vehicle system along a route. The propulsion system can represent one or more engines, motors, transmissions, propellers, or the like, that generate propulsion to move the vehicle system. The propulsion system may include one or more propulsion devices that may be distributed across one or more vehicles of the vehicle system. The propulsion devices may operate together to control movement of the vehicle system. In one or more embodiments, one or more vehicles may include individual propulsion systems that may operate independent of the other propulsion systems of other vehicles. In another example, the load may be another system or device, for example an air compressor, house power or head end power (HEP), a hydraulic pump, or the like.

The traction system may have varying voltage requirements based on characteristics of the traction system, the vehicle system, or the energy provision system. For example, the traction system may require a higher voltage when the traction system may be propelling the vehicle system. This may also be referred to as the traction system being in a motoring mode of operation or a braking mode of operation. As used herein, a higher voltage may include voltages demanded during motoring or braking that may be greater than voltages demanded while idling or stationary. In one example, a higher voltage may include a voltage that is higher than a supply voltage output by an energy provision system. Further, at higher moving speeds of the vehicle system, the traction system may require an even higher voltage. For example, the traction system may require a higher voltage when the vehicle speed is greater than 60 miles-per-hour, greater than 63 miles-per-hour, greater than 70 miles-per-hour, greater than 72 miles-per-hour, or the like. When the vehicle system may be stationary or moving at low speeds, the traction system may require lower voltage.

A state of charge of the energy storage devices may be determined. The state of charge of the energy storage device may be related to an electric power value or voltage that the energy storage device may provide. For example, when the energy storage device may have a full state of charge, the electric power value or voltage that the energy storage device may provide may be greater than the electric power value or voltage that the energy storage device may provide when the state of charge may be low. As used here, high and low may be relative terms, for example, a high state of charge may refer to the energy storage device being more charged and a low state of charge may refer to the energy storage device being less charged, relative to the high state of charge. The energy storage device may have a designated threshold state of charge. The designated threshold state of charge may be related to an electric power demanded by the load, for example, when the state of charge may be above the designated threshold state of charge, the energy storage device may be able to provide the electric power demanded by the load without use of a converter. When the state of charge may be less than the designated threshold state of charge, the energy storage device may require the converter to step up the electric power to provide the electric power demanded by the load.

The energy conversion system may include a control system. The control system may include a controller 150 that can communicate control signals to the energy provision system to control supply of the current to the load. While the controller shown in Figure 1 may be shown within the energy conversion system, in other examples the controller may be remote from the energy conversion system. The controller may have hardware circuitry that may include and/or may be connected with one or more processors (e.g., one or more microprocessors, integrated circuits, microcontrollers, field programmable gate arrays, etc.). The controller may represent one or more control units or devices that may be operably connected to perform the operations described herein. In an embodiment, the one or more processors may be disposed in a single, unitary control unit. In another embodiment, the controller may include multiple different control units, and the processors may be distributed among the control units. The controller may include and/or may be connected with a tangible and non-transitory computer-readable storage medium (e.g., data storage device), referred to herein as memory. The memory may store program instructions (e.g., software) that are executed by the one or more processors to perform the operations described herein. The program instructions may include one or more algorithms utilized by the one or more processors to generate one or more outputs. The program instructions may provide functions, models, and/or neural networks used to generate the outputs. The program instructions may further dictate actions to be performed by the one or more processors.

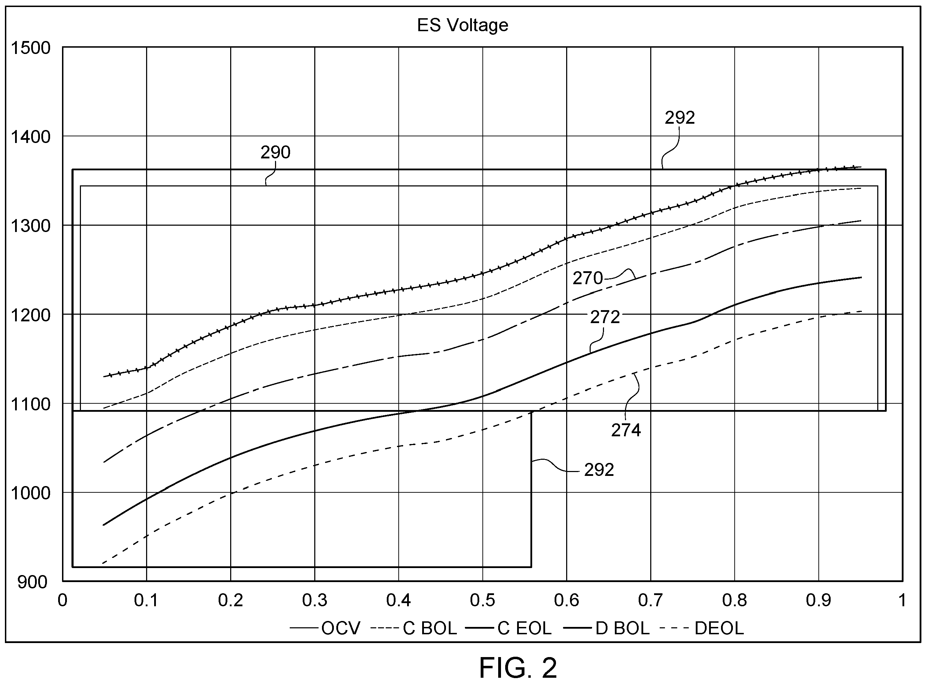

Figure 2 shows a graph illustrating an output voltage and a state of charge of an energy storage device, as well as a desired input voltage to power a traction system, according to one example. The x-axis of the graph may show the state of charge of the energy storage device. The y-axis of the graph may show the output voltage of the energy storage device. Line 270 may show a voltage of a traction system operating in a first mode, for example operating at notch 1 (e.g., low power). Line 272 may be the energy storage device operating at a beginning of the energy storage device's life. Line 272 may show the traction system operating in a second mode, for example operating at notch 8 (e.g., high power). Line 274 may show the energy storage device with an older operating age. Line 274 may show the traction system operating in the second mode, for example operating at notch 8.

Box 290 may be a desired range of operating voltage of the traction system or load of the system. In Figure 2, the box 290 may show a portion of the graph where the traction system may be powered directly by the energy storage device without a modification of the output voltage. Box 292 may show a portion of the graph where the output voltage of the energy storage device may fall below the desired range of operating voltage of the traction system. In this case, it may be beneficial to boost the output voltage from the energy storage device to achieve an input voltage within the desired range of the traction system. For example, when the voltage and state of charge of the energy storage device may be within box 292, the converters may be activated and the output voltage of the energy storage device may be augmented by the converters, discussed above, to step up the voltage to the desired range of the traction system. In one example, this step up by the one or more converters may be referred to as an energy boost. In this configuration only a portion of the energy may be transformed through the energy boost.

The energy boost may be selectively applied only when the voltage and state of charge of the energy storage device may be outside of the desired range of operating voltage of the traction system. Once the voltage of the energy storage device may return to the desired range of operating voltage of the traction system, the energy boost may be stopped, and the converter may be deactivated. This may allow the system to be operated with increased efficiency, but only implementing the one or more converters when an energy boost may be needed to operate the traction system. Thus, the one or more converters may not be always in operation.

As illustrated by the graph shown in Figure 2, the energy boost may be needed more when using an energy storage device with an older operating age. For example, the beginning of life energy storage device shown by line 272 may need the energy boost mode when the state of charge is at 40% or 0.4. However, the energy storage device with the older operating age shown by line 274 may need the energy boost when the state of charge is at 55% or 0.55. These specific points are merely used for illustration. It is understood that the particular state of charge where the energy boost may be needed may vary based on load demand characteristics, supply demand characteristics, state of charge of the energy storage device, or the like. Lines 272 and 274 may be operating at a relatively higher-powered operational characteristic, such as notch 8. However, line 270 may be operating at a relatively lower powered characteristic, such as notch 1. As such, line 270 may need the energy boost when the state of charge is at about 17% or 0.17. As such, the energy conversion system may modify when and for how long and/or how much the energy boost may be implemented to improve performance and efficiency based on a variety of factors regarding the load, the energy storage system, and the converters.

In one example, the controller may selectively activate the converter based at least in part on a measured demand characteristic of the load and on a measured electric supply characteristic of the energy provision system. For example, where the load is the traction system, the traction system may require a voltage in a specific operating range to power the traction system. In one example, artificial intelligence (AI) or machine learning may be used to determine when and for how long to activate the converter. The voltage required by the traction system may vary depending on measured demand characteristics, for example, whether the traction system is propelling a vehicle system (e.g., motoring or braking), based on the speed of the vehicle system, In one example, the traction system may require a voltage in a range that is less than about 500V, in a range from about 500V to about 1000V, from about 1000V to about 1400V, from about 1400V to about 2000V, or from about 2000V to about 3000V. In one embodiment, the traction system may operate at a voltage of about 1400V. In another example, the traction system may operate at a voltage of 2600V.

The voltage supplied by the energy provision system may vary depending on electric supply characteristics. For example, the voltage supplied by the energy provision system may vary based on the state of charge of the energy storage device. The voltage provided by the energy provision system may be in a range of from about 100V to 400V, from about 400V to 800V, or from about 800V to 1000V.

Where the voltage required to power the load may be greater than the voltage output by the energy provision system, the controller may selectively activate the converters based on the measured demand characteristic and on the measured electric supply characteristic. In this way, the converter may be activated only for the portion of the time that an increased voltage may be needed for the load, but the converter may be inactive when the load may be powered directly by the voltage from the energy provision system. This may result in increased efficiency due to energy loss associated with converters. Further, only the portion of the voltage that may need to be stepped up may be converted by the converter. For example, if the energy provision system may output 1000V and the load may demand 1200V, 200V may be converted to 400V and the remaining 800V may pass through the converter without being converted. This may limit the energy loss caused by the converter and may allow a small or partial converter to be used for the system.

In one example, the controller may deactivate the converter or prevent the activation of the converter based on characteristics of the system. Where the traction system may not be operating to propel the vehicle system, the traction system may have a reduced voltage demanded by the system. The reduced voltage may be less than a threshold demand. The voltage stored in the energy provision system may have a storage threshold. Where the threshold demand may be less than the storage threshold, the converter may be deactivated.

The electric power demanded by the traction motor may be less than a designated threshold electric power. The designated threshold electric power may be the threshold of power above which the energy provision system may be able to provide the entirety of the electric power demanded by the load. Where the electric power demanded by the traction motor may be less than the designated threshold electric power, the converter may be deactivated.

When the moving speed of the vehicle system may be slower than a designated threshold speed, the voltage demanded by the traction system may be reduced. As the vehicle speed decreases, the voltage demanded may also decrease as the vehicle system may need less energy to move at lower speeds. With the reduced voltage based on the moving speed being below the designated threshold speed, the energy provision system may be able to provide sufficient voltage and the converter may be deactivated.

The energy storage device may have a designated threshold state of charge. The state of charge may reflect the available power that the energy storage device may output. When the state of charge of the energy storage device may be high, the energy storage device may be able to output a higher voltage. When the state of charge of the energy storage device may be low, the energy storage device may be able to output a lower voltage. The designated threshold state of charge may be determined based on the typical demands of the load. When the state of charge of the energy storage device may be above the designated threshold state of charge, the converter may be deactivated.

In one example, the state of charge of the energy storage device may be high, and the energy storage device may be able to output a higher voltage. The state of charge of the energy storage device may be above the designated threshold. However, the higher voltage output by the energy storage device may be above a voltage needed to power the load. As such, the converter may be activated to decrease the output voltage from the energy storage device into a usable input voltage to power the load.

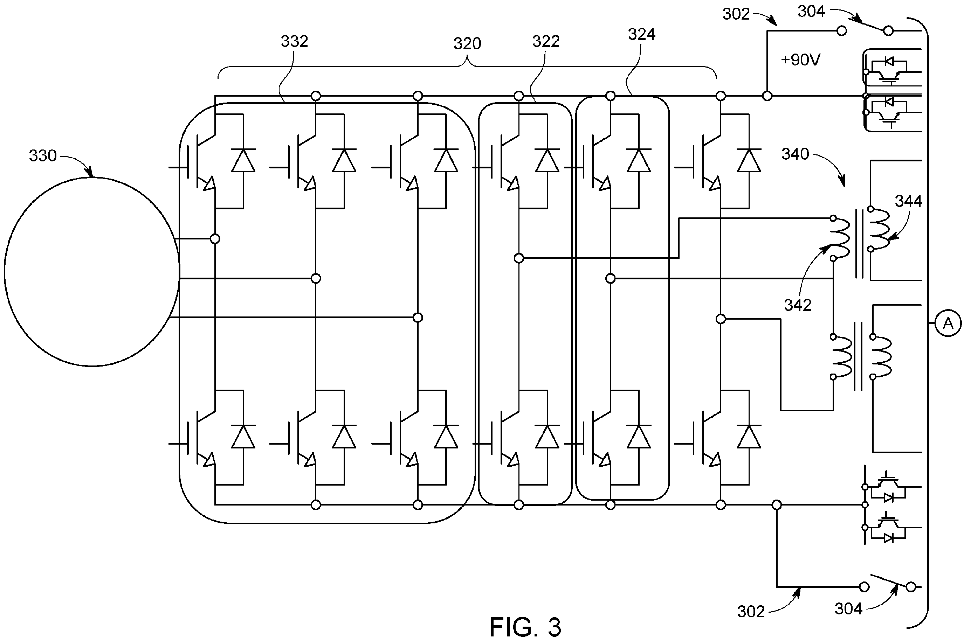

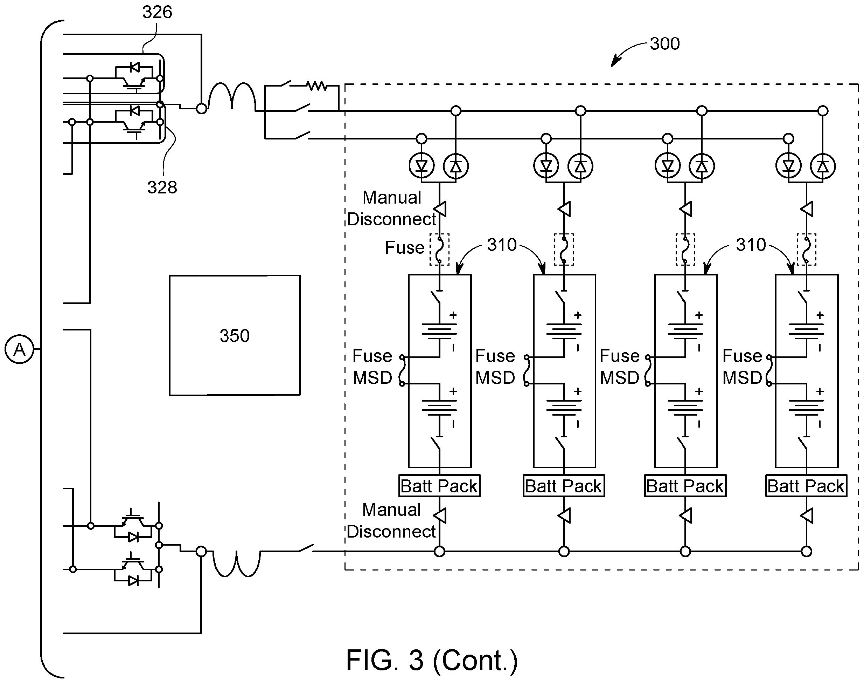

Figure 3 illustrates one example of an energy conversion system 300 including DAB converters 302. The energy conversion system may include the one or more converters, one or more energy provision systems 310, one or more inverters 320, a transformer 340, and a load 330. The system may include a traction motor 332 that may receive power from the energy provision systems.

A DAB converter may be a type of power electronics converter that may be used in applications such as electric vehicle charging, renewable energy systems, and high-power DC-DC conversion. It may consist of two bidirectional bridges, also known as legs, connected through a high-frequency transformer. Each bridge may have two power switches and two diodes. The DAB topology may provide an adjustable bi-directional power flow between two isolated DC links over a broad range of voltage ratio. Conventionally, power flow control may be achieved by adjusting only the phase shift between a primary and a secondary side.

The transformer may include a primary side 342 and a secondary side 344. Power flow control may be achieved by adjusting the phase shift between the primary and the secondary sides. In one example, the transformer may have a turns ratio of approximately 100:9. A turns ratio is defined as the number of turns on its secondary divided by the number of turns on its primary. A voltage ratio of an ideal transformer may be directly related to the turns ratio. Thus, where the input voltage of the primary side may be 100V, the output voltage of the secondary may be 9V. Where the output voltage of the secondary may be 8V, the system may be in a buck mode or a step-down mode. Where the output voltage of the secondary may be 10V, the system may be in a boost mode or a step-up mode. In other examples, the transformer may have a different turns ratio, for example 100:3, 100:5, 100:7, 100:12: 100:15, 100:20, or somewhere within this range.

The transformer may be coupled with a first portion 322, a second portion 324, a third portion 326, and a fourth portion 328. The first portion and the second portion may be connected to the primary side. The third portion and fourth portion may be connected to the secondary side. Each of these portions may have a positive end and a negative end. In the illustrated example, the positive end of the first and second portions may be at the top and the negative end may be at the bottom.

When the positive end of the first portion and the positive end of the second portion are active at the same time, the transformer may experience no effective voltage, because the voltage on either side of the transformer may be offset. The transformer may shift the phases of each of the four portions to modify the power transfer. For example, the first portion may be activated at an offset duration from the second portion. In one example, the phase shift between the first portion and the second portion may be 15 degrees, 45 degrees, 75 degrees, 90 degrees, 180 degrees, 270 degrees, or a position in between. A phase of the third portion can similarly be staggered from the first portion and the second portion. A phase of the fourth portion can be staggered from the first portion, the second portion, and the third portion. The controller may control the phase shifting of the first, second, third, and fourth portions. The voltage and power flow through the system may be controlled by the phase shifts. While Figure 3 may show the first portion and the second portion connected to the primary side, in other examples, the first portion and the second portion may be connected to the secondary side. In another example, the first portion and the second portion may be connected to the energy provision system. In another example, the first portion and the second portion may be connected to a different power source.

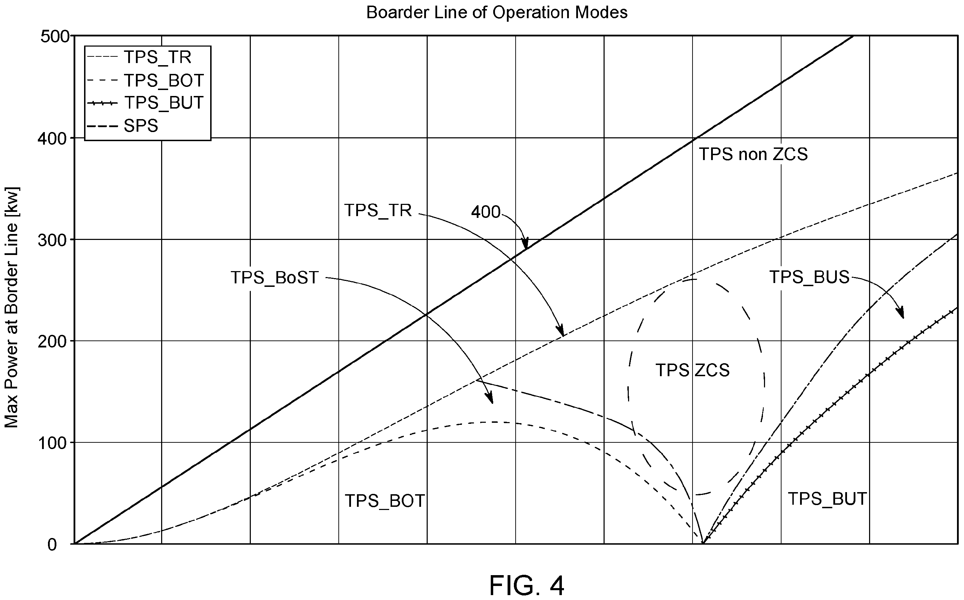

Figure 4 illustrates a switching mode map, according to one example. The switching mode map may show the modes of operation for a triple phase shift (TPS) system. The x-axis may show a ratio voltage of the energy provision system. The y-axis may show a max power at the border line. A single phase shift (SPS) line 400 may be illustrated for reference. The SPS may illustrate an amount of power that may be transferred between a primary side and a secondary side of the system.

The modes may show a bucking mode, in which the converters may be used to step down the voltage and a boosting mode, in which the converters may be used to step up the voltage. The bucking mode may be used when the output voltage of the energy storage device may be higher than a demand voltage required by the load. The bucking mode may reduce the voltage to an operable range for the load. The bucking mode may also be used where a voltage of a charging input directed to the energy storage device may be greater than a threshold charging voltage that the energy storage device may receive. The bucking mode may reduce the voltage of the charging input to the threshold charging voltage that the energy storage device may receive. The bucking mode may be used for only the portion of the voltage required to be stepped down, as well as for only the duration needed. Once the output voltage/charging input may be within an operable range for the load/energy storage device, respectively, the bucking mode may stop.

The boosting mode may be used when the output voltage of the energy storage device may be lower than a demand voltage required by the load. The boosting mode may increase the voltage to an operable range for the load. The boosting mode may also be used where a voltage of a charging input directed to the energy storage device may be less than a threshold charging voltage that the energy storage device may receive. The boosting mode may increase the voltage of the charging input to the threshold charging voltage that the energy storage device may receive. The boosting mode may be used for only the portion of the voltage required to be stepped up, as well as for only the duration needed. Once the output voltage/charging input may be within an operable range for the load/energy storage device, respectively, the boosting mode may stop.

The switching mode map illustrated in Figure 4 may show TPS zero current switching (ZCS) area indicated by the dashed oval. The TPS ZCS may be the region in which no current switching occurs. In one example, this region may be an efficient region for the system to operate. The switching modes may include a "triple phase shift trapezoidal" ("TR") mode. The switching modes may include a "triple phase shift buck saturated" ("BuS") mode. The switching modes may include a "triple phase shift boost triangular" ("BoT") mode. The switching mode may include a "triple phase shift buck triangular" ("BuT") mode. The switching mode may include a "triple phase shift boost triangular" ("BoST") mode. For a switching mode map corresponding to a given value of voltage, an upper boundary of each switching mode region may be defined by a maximum power Pmax that may be achievable using that switching mode.

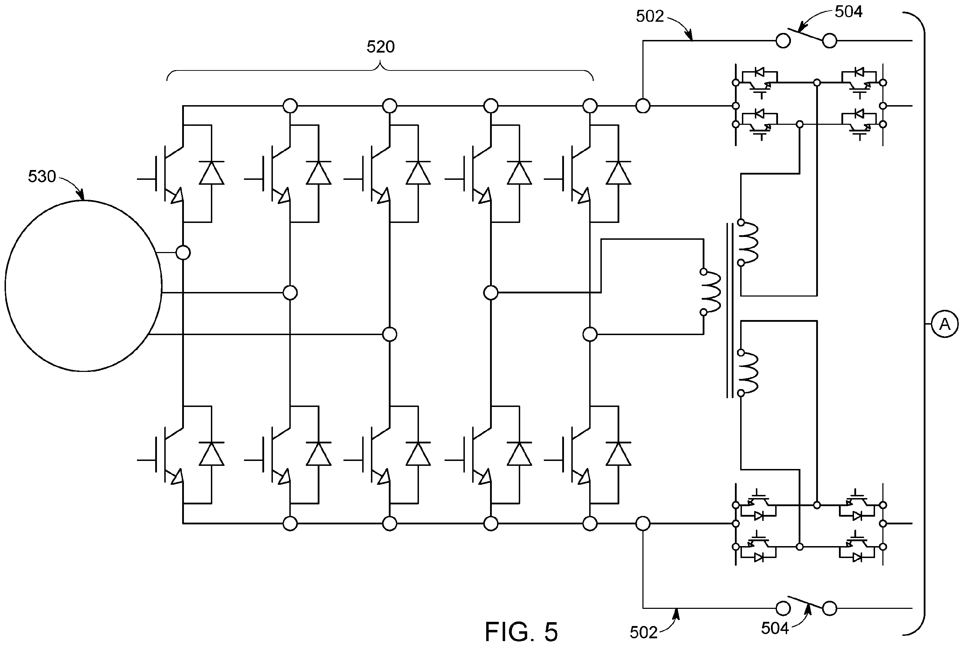

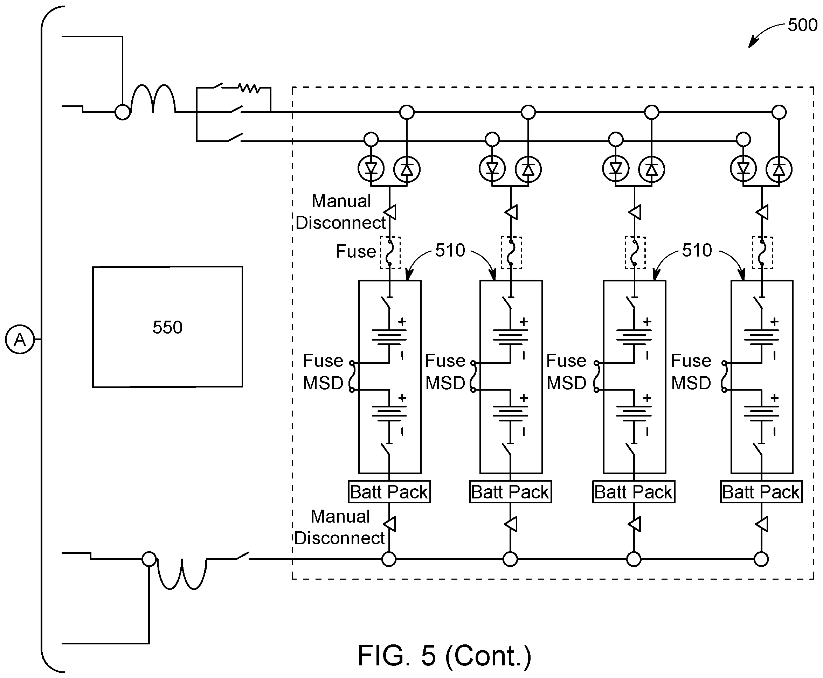

Figure 5 illustrates one example of an energy conversion system 500 including triple active bridge converters 502. The energy conversion system may include the one or more converters, one or more energy provision systems 510, one or more inverters 520, and a load 530. There may be five phase shifts with this arrangement. A primary side of the triple active bridge may be connected to the load. In another example, the primary side of the triple active bridge may be connected to the energy provision system. In another example, the primary side may be connected to a different power source.

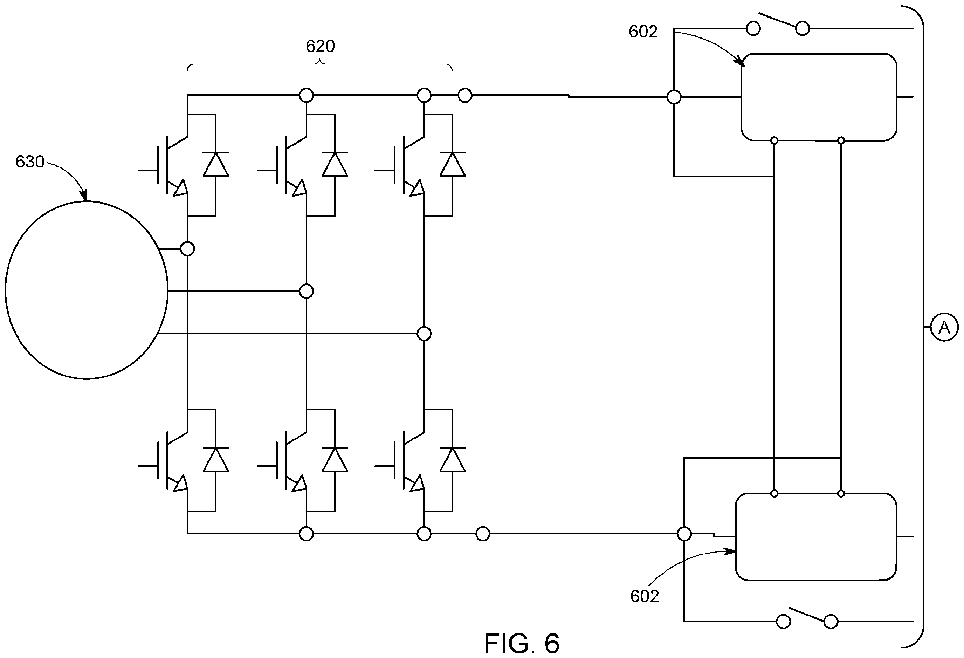

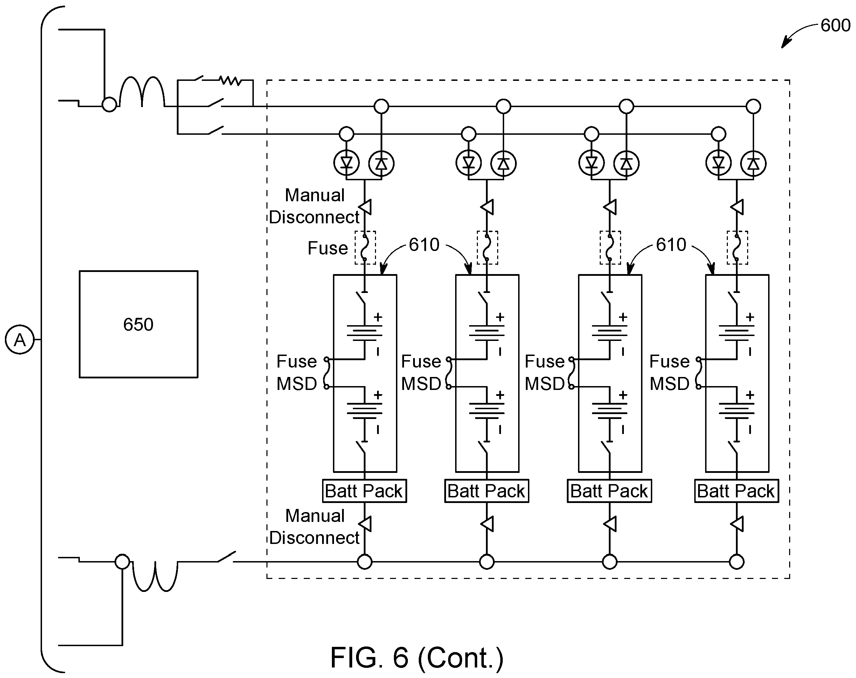

Figure 6 illustrates one example of an energy conversion system 600 including two DAB converters 602. The energy conversion system may include the one or more converters, one or more energy provision systems 610, one or more inverters 620, and a load 630. The one or more converters may be high frequency converters. The converters could be of the boosting type, the bucking type, or both.

The embodiments illustrated in Figures 5 and 6 function substantially similarly to the embodiments described above with reference to Figures 1 and 3. However, the embodiments illustrated in Figures 5 and 6 may include different converter arrangements and converter topologies. The overall energy conversion systems of Figures 5 and 6 may include the characteristics discussed above, as such, details described above with reference to Figures 1 and 3 will not be repeated in reference to Figures 5 and 6.

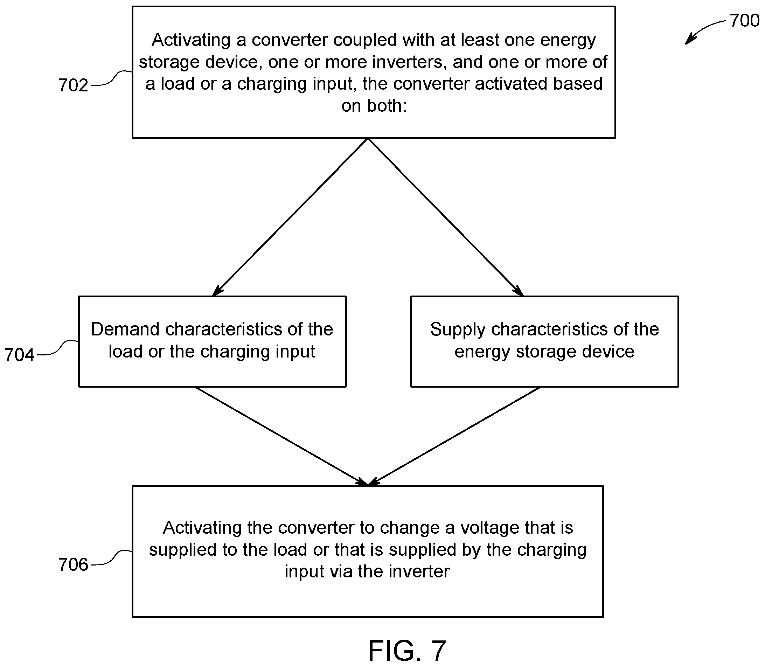

Figure 7 illustrates a flowchart of a method of energy conversion, according to one example. At step 702, the method may include activating a converter coupled with at least one energy storage device, one or more inverters, and one or more of a load or a charging input. In one example, the load may be a traction system, an air compressor, house power or head end power (HEP), a hydraulic pump, or the like.

At step 704, the method may include the converter being activated based on both demand characteristics of the load or the charging input and on supply characteristics of the energy storage device. The demand characteristics may include voltage demanded by the load and a stored voltage stored in the energy storage device. The demand characteristics may include electric power demanded by the load. The demand characteristics may include whether a traction motor may be propelling a vehicle system, as well as a moving speed of the vehicle system. The supply characteristics of the energy storage device may include an amount of electric energy demanded by a load, a state of charge of the energy storage device, or the like.

At step 706, the method may include activating the converter to change a voltage that may be supplied to the load or that may be supplied by the charging input via the inverter. The converter may increase, or step-up the voltage, or the converter may decrease, or step-down the voltage.

In one example, the vehicle system may include a vehicle power system. The vehicle power system may include the traction system. The vehicle power system may have multiple modes of operation. For example, the vehicle power system may include a normal mode, a low voltage mode, and a boosted voltage mode. The controller of the vehicle system may switch the operation of the vehicle system between the multiple modes of operation. The controller may switch the vehicle system to the normal mode responsive to the voltage of the energy storage device being at least a threshold amount. When the voltage of the energy storage device is at least the threshold amount, the energy storage device may have sufficient voltage to power the required loads. Additionally, the controller may switch the vehicle system to the normal mode responsive to the vehicle being stationary. When the vehicle may be stationary, the demanded voltage may be relatively low, and the vehicle system may be able to supply the demanded voltage in the normal mode. The controller may switch the vehicle system to the boosted mode responsive to a voltage of the vehicle storage device being less than a threshold amount and the vehicle system being in motion. When the voltage of the vehicle storage device may be less than the threshold amount and the vehicle system may be in motion, the voltage demanded by the vehicle system may be greater than the voltage of the vehicle storage device, thus the boosted mode may be required to make up this difference. In one example, an AI or machine learning system may determine when and what mode of operation the vehicle power system should operate in based on the demand and supply characteristics.

In one example, the converter may convert a charging input directed to the energy storage device. In one example, the charging input may be generated by dynamic braking of the vehicle system. In one example, the charging input may be provided by a conductive pathway. The conductive pathway may be an overhead catenary line, an overhead trolley line, a traction wire, an overhead contact system, overhead equipment, an overhead line, or the like. The conductive pathway may be positioned over a route traveled by the vehicle system and may be connected to feeder stations at regular intervals which may provide electric power to the conductive pathway. The feeder stations may be electrically connected to a high-voltage electrical grid to provide electrical current and energy to the conductive pathway. In another example, the conductive pathway may be an electrified rail or rails over which the vehicle travels. The electrified rail may be a third rail that runs adjacent to or near a first and second rail that make up the route. The electrified rail may engage a lower portion of the vehicle system, for example a conductive shoe, to provide the electric current to the vehicle. The charging input, or a portion thereof, may be stepped down by the converters in order to be in an acceptable voltage range to charge the energy storage device.

The energy conversion system may include sensors. The sensors may include electrical sensors or mechanical sensors. The sensors may measure an electrical output related to the energy provision system, the load, or the charging input. The sensors may generate an output to send to the controller. The controller may have a storage of target or expected output values when the load and/or the energy provision system may be in a fully operational state. With the one or more outputs measured from the sensors, the controller may then be able to determine an operational state of the load and the energy provision system by comparing the measured outputs with the target outputs. For example, the controller may determine, based on the measured outputs, that the load requires a different voltage. The controller may be able to activate or deactivate the converters to adjust the voltage to the load, accordingly.

The electrical sensors may include an ohmmeter measuring electrical resistance, a voltmeter measuring electrical potential in volts, an impedance analyzer measuring impedance, an ammeter measuring current, a database or memory, a thermometer measuring a temperature of the energy storage system or the traction system, an input device (e.g., control panel, switch, keyboard, microphone, etc.), or the like. The electrical sensors may read the electrical characteristics of the load, the energy provision system, the charging input, or the like.

The sensors may sense electrical characteristics of the electric current conducted to the load from the energy provision system. The sensors may communicate the measured and sensed characteristics to the controller. The controller may then implement responsive actions. For example, the responsive actions may be to activate the converters, deactivate the converters, adjust the load, or the like.

As discussed above, the energy conversion method and system may operate autonomously without user input. Additionally, the energy conversion method may catalog previously run and collected data. In one embodiment, the energy conversion system may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the energy conversion system may include a policy engine that may apply one or more policies. These policies may be based at least in part on characteristics of a given item of equipment or environment. With respect to control policies, a neural network can receive input of a number of environmental and task-related parameters. These parameters may include a demanded voltage demanded by the load, a stored voltage stored in the energy storage device, whether a traction motor is propelling a vehicle system, a moving speed of the vehicle system, a state of charge of the energy storage device, or the like. The neural network can be trained to generate an output based on these inputs, with the output representing an action or sequence of actions that the controller should take to activate or deactivate the converter. During operation of one embodiment, a determination can occur by processing the inputs through the parameters of the neural network to generate a value at the output node designating that action as the desired action. This action may translate into a signal that causes the converter to be activated or deactivated. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the controller executes that plan to achieve the desired input data to mirror the predicted best outcome scenario. Additionally, the success metric may be a combination of the optimized outcomes, which may be weighed relative to each other.

In one embodiment, a method is provided that includes activating a converter coupled with at least one energy storage device, one or more inverters, and one or more of a load or a charging input. The converter is activated based on (a) demand characteristics of the one or more of the load or the charging input and (b) supply characteristics of the at least one energy storage device. The converter is activated to change a voltage that is supplied to the load or that is supplied by the charging input via the inverter.

In one example, the method may include determining whether the load may be operating to perform work based at least in part on the demand characteristics. The demand characteristics may include a demanded voltage demanded by the load and a stored voltage stored in the at least one energy storage device. The converter may be activated responsive to the demanded voltage being greater than a threshold demand and the stored voltage being less than a storage threshold. The load may be a vehicle system and the demand characteristics may include a moving speed of the vehicle system. The method may include determining the speed of the vehicle system and comparing the moving speed to a determined threshold speed value.

In one example, the demand characteristics may include an electric power demanded by the load. The method may include determining whether the electric power demanded by the load is greater than a designated threshold electric power value. The method may include determining that a state of charge of the at least one energy storage device may be less than a designated threshold state of charge.

The load may include a traction motor of a vehicle system. The method may include deactivating the converter or preventing activation of the converter responsive to determining: the traction motor is not operating to propel the vehicle system, the moving speed of the vehicle system being slower than a designated threshold speed, an electric power demanded by the traction motor does not exceed a designated threshold electric power, or a state of charge of the at least one energy storage device is above a designated threshold state of charge. The converter may be activated to reduce the voltage that is one or more of supplied to the load or supplied by the charging input via the inverter.

In one embodiment, a power supply system is provided that includes a converter and a controller. The converter may change a voltage output by an energy storage device prior to the voltage being supplied to an inverter responsive to activation of the converter. The controller may selectively activate the converter based at least in part on a measured demand characteristic and on a measured electric supply characteristic.

In one example, the demand characteristic may include whether a traction motor is propelling a vehicle system. The demand characteristic may include a moving speed of a vehicle system. The controller may activate the converter responsive to measuring the moving speed of the vehicle system to be faster than a designated threshold speed. The electric supply characteristic may include an amount of electric power demanded by a traction motor. The controller may activate the converter responsive to measuring the electric power demanded by the traction motor as greater than a designated threshold electric power.

In one example, the electric supply characteristic may include a state of charge of the energy storage device. The controller may activate the converter responsive to a state of charge of the energy storage device being less than a designated threshold state of charge. The controller may deactivate, or prevent activation of, the converter responsive to one or more of a traction motor not operating to propel a vehicle system, a moving speed of the vehicle system being no faster than a designated threshold speed, an electric power demanded by the traction motor not exceeding a designated threshold electric power, or a state of charge of the energy storage device being at least a designated threshold state of charge.

In one embodiment, a power supply system is provided that includes a controller. The controller may switch operation of a vehicle power system between different modes. The modes may include a normal mode and a boosted voltage mode. The controller may switch the operation of the vehicle power system to the boosted voltage mode responsive to a voltage of a vehicle battery being less than a threshold amount and the vehicle being in motion.

In one example, the controller may switch the operation of the vehicle power system to the normal mode responsive to the voltage of the vehicle battery being at least the threshold amount or the vehicle being stationary. The controller may switch the operation of the vehicle power system to the boosted voltage mode by activating a converter of the vehicle power system. The controller may switch the operation of the vehicle power system to the boosted voltage mode responsive to the voltage of the vehicle battery being less than the threshold amount, the vehicle being in motion, and the vehicle moving faster than a designated speed. The controller may switch the operation of the vehicle power system to the normal mode from the boosted voltage mode responsive to the voltage of the vehicle battery being at least the threshold amount, the vehicle being stationary, or the vehicle moving no faster than a designated speed.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the inventive subject matter without departing from its scope. While the dimensions and types of materials described herein define the parameters of the inventive subject matter, they are exemplary embodiments. Other embodiments will be apparent to one of ordinary skill in the art upon reviewing the above description. The scope of the inventive subject matter should, therefore, be determined with reference to the appended claims, along with the full scope of equivalents to which such claims are entitled.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

This written description uses examples to disclose several embodiments of the inventive subject matter, including the best mode, and to enable one of ordinary skill in the art to practice the embodiments of inventive subject matter, including making and using any devices or systems and performing any incorporated methods. The patentable scope of the inventive subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method, comprising:
activating a converter coupled with at least one energy storage device, one or more inverters, and one or more of a load or a charging input, the converter activated based on (a) demand characteristics of the one or more of the load or the charging input and (b) supply characteristics of the at least one energy storage device, the converter activated to change a voltage that is supplied to the load or that is supplied by the charging input via the inverter.

2. The method of claim 1, further comprising:
determining whether the load is operating to perform work based at least in part on the demand characteristics.

3. The method of claim 1 or 2, wherein the demand characteristics include a demanded voltage demanded by the load and a stored voltage stored in the at least one energy storage device, and the converter is activated responsive to the demanded voltage being greater than a threshold demand and the stored voltage being less than a storage threshold.

4. The method of any one of claims 1 to 3, wherein the load is a vehicle system and the demand characteristics include a moving speed of the vehicle system, and further comprising determining the speed of the vehicle system and comparing the moving speed to a determined threshold speed value.

5. The method of any one of claims 1 to 4, wherein the demand characteristics include an electric power demanded by the load, and further comprising determining whether the electric power demanded by the load is greater than a designated threshold electric power value.

6. The method of any one of claims 1 to 5, further comprising determining that a state of charge of the at least one energy storage device is less than a designated threshold state of charge.

7. The method of any one of claims 1 to 6, wherein the load includes a traction motor of a vehicle system, and further comprising:
deactivating the converter or preventing activation of the converter, responsive to determining:
the traction motor not operating to propel the vehicle system,
the moving speed of the vehicle system being slower than a designated threshold speed,
an electric power demanded by the traction motor does not exceed a designated threshold electric power, or
a state of charge of the at least one energy storage device is above a designated threshold state of charge.

8. The method of any one of claims 1 to 7, wherein the converter is activated to reduce the voltage that is one or more of supplied to the load or supplied by the charging input via the inverter.

9. A power supply system, comprising:
a converter configured to change a voltage output by an energy storage device prior to the voltage being supplied to an inverter responsive to activation of the converter; and
a controller configured to selectively activate the converter based at least in part on a measured demand characteristic and on a measured electric supply characteristic.

10. The power supply system of claim 9, wherein the demand characteristic includes whether a traction motor is propelling a vehicle system.

11. The power supply system of anyone of claims 9 to 10, wherein the demand characteristic includes a moving speed of a vehicle system.

12. The power supply system of claim 11, wherein the controller is configured to activate the converter responsive to measuring the moving speed of the vehicle system to be faster than a designated threshold speed.

13. The power supply system of anyone of claims 9 to 12, wherein the electric supply characteristic includes an amount of electric power demanded by a traction motor.

14. The power supply system of claim 13, wherein the controller is configured to activate the converter responsive to measuring the electric power demanded by the traction motor as greater than a designated threshold electric power.

15. The power supply system of anyone of claims 9 to 14, wherein the electric supply characteristic includes a state of charge of the energy storage device.

16. The power supply system of claim 15, wherein the controller is configured to activate the converter responsive to a state of charge of the energy storage device being less than a designated threshold state of charge.

17. The power supply system of anyone of claims 9 to 16, wherein the controller is configured to deactivate, or prevent activation of, the converter responsive to one or more of a traction motor not operating to propel a vehicle system, a moving speed of the vehicle system being no faster than a designated threshold speed, an electric power demanded by the traction motor not exceeding a designated threshold electric power, or a state of charge of the energy storage device being at least a designated threshold state of charge.

18. A power supply system, comprising:
a controller configured to switch operation of a vehicle power system between different modes, the modes including a normal mode and a boosted voltage mode, the controller configured to switch the operation of the vehicle power system to the boosted voltage mode responsive to a voltage of a vehicle battery being less than a threshold amount and the vehicle being in motion.

19. The power supply system of claim 18, wherein the controller is configured to switch the operation of the vehicle power system to the normal mode responsive to the voltage of the vehicle battery being at least the threshold amount or the vehicle being stationary.

20. The power supply system of claim 18 or 19, wherein the controller is configured to switch the operation of the vehicle power system to the boosted voltage mode by activating a converter of the vehicle power system.

21. The power supply system of anyone of claims 18 to 20, wherein the controller is configured to switch the operation of the vehicle power system to the boosted voltage mode responsive to the voltage of the vehicle battery being less than the threshold amount, the vehicle being in motion, and the vehicle moving faster than a designated speed.

22. The power supply system of anyone of claims 18 to 21, wherein the controller is configured to switch the operation of the vehicle power system to the normal mode from the boosted voltage mode responsive to the voltage of the vehicle battery being at least the threshold amount, the vehicle being stationary, or the vehicle moving no faster than a designated speed.
